Europäisches Patentamt

European Patent Office

Office européen des brevets

(11) Veröffentlichungsnummer : **0 383 181 B1**

(12) # EUROPÄISCHE PATENTSCHRIFT

(45) Veröffentlichungstag der Patentschrift :
**29.04.92 Patentblatt 92/18**

(51) Int. Cl.⁵ : **B60J 3/02**

(21) Anmeldenummer : **90102398.6**

(22) Anmeldetag : **07.02.90**

(54) **Blendschutzvorrichtung.**

(30) Priorität : **14.02.89 DE 3904367**

(43) Veröffentlichungstag der Anmeldung :
**22.08.90 Patentblatt 90/34**

(45) Bekanntmachung des Hinweises auf die
Patenterteilung :
**29.04.92 Patentblatt 92/18**

(84) Benannte Vertragsstaaten :
**BE DE ES FR GB IT SE**

(56) Entgegenhaltungen :
**DE-B- 1 140 475**
**FR-A- 774 940**
**US-A- 4 614 375**

(73) Patentinhaber : **Gebr. Happich GmbH**
**Postfach 10 02 49 Clausenbrücke 1**
**W-5600 Wuppertal 1 (DE)**

(72) Erfinder : **Viertel, Lothar**
**Lilienstrasse 4**
**W-6636 Altforweiler (DE)**
Erfinder : **Welter, Patrick**
**Chemin de Romains**
**F-57730 Lachambre (FR)**
Erfinder : **Kaiser, Peter**
**Sellscheid 42**
**W-5632 Wermelskirchen (DE)**

EP 0 383 181 B1

Jouve, 18, rue Saint-Denis, 75001 PARIS

## Beschreibung

Die Erfindung bezieht sich auf eine Blendschutzvorrichtung, insbesondere für Fahrzeuge, bestehend aus zwei parallel zueinander verlaufenden Profilleisten und aus einer Anzahl zwischen den Profilleisten angeordneten, einander überlappenden Lamellenstreifen, deren Längsenden jeweils mit einer der Profilleisten gelenkig verbunden sind und deren jeweilige Anlenkpunkte einander diagonal gegenüberliegen.

Eine Blendschutzvorrichtung der gattungsgemäßen Art ist durch die DE-B-11 40 475 bekanntgeworden.

Die der Erfindung zugrundeliegende Aufgabe besteht darin, die Blendschutzvorrichtung der eingangs genannten Art hinsichtlich des Aufbaus zu vereinfachen und zu verbessern.

Zur Lösung dieser Aufgabe ist erfindungsgemäß vorgesehen, daß jede Profilleiste eine längsdurchlaufende, etwa schwalbenschwanzartig gestaltete Nut aufweist, daß jeder Lamellenstreifen an den Längsenden jeweils einen dem Öffnungsquerschnitt der Nuten angepaßten Lagerzapfen trägt, daß jeweils ein Lagerzapfen auf der Vorderseite und jeweils ein Lagerzapfen auf der Rückseite jedes Lamellenstreifens angeordnet ist, daß zwischen den Lagerzapfen einander benachbarter Lamellenstreifen jeweils ein in der Nut geführtes, sich an den Lagerzapfen abstützendes Distanzelement angeordnet ist und daß die Lagerzapfen des ersten und letzten Lamellenstreifens durch ein Sperrelement gegen axiales Verschieben gesichert sind.

Durch diese erfindungsgemäßen Maßnahmen ist eine komfortsteigernde, kostengünstige und nachrüstbare Blendschutzvorrichtung geschaffen, die statt durch aufwendige Nietarbeiten durch bloße Steckmontage zusammenbaubar ist.

Bevorzugterweise sind die Profilleisten als Schienen mit U-förmigem Querschnittsprofil ausgeführt, deren offene Seiten einander gegenüberliegen. Dabei ist die Nuttiefe der Profilleisten gleich oder geringfügig größer als die halbe Breite der Lamellenstreifen.

Durch diese Ausgestaltung wird erreicht, daß die Blendschutzvorrichtung eine nur geringe Bauhöhe aufweist, daß die Lamellen bei Nichtgebrauch der Blendschutzvorrichtung geschützt zwischen den Profilleisten untergebracht sind und daß die Blendschutzvorrichtung eine für Lager- und Versandzwecke ideale, insbesondere auch stapelbare Verpackungseinheit bildet.

Gemäß einer Weiterbildung der Erfindung kann weiterhin vorgesehen sein, daß die Lamellenstreifen als Kunststoffspritzgußkörper mit einstückig daran angeformten Lagerzapfen, die jeweils ein zylindrisches Halsstück und ein zylindrisches Kopfstück aufweisen, ausgeführt sind. Durch diese Maßnahmen sind die Lamellenstreifen nebst Lagerzapfen einfach und kostengünstig herstellbar und ohne besonderen Aufwand unterschiedlichen Ausstattungsfarben anpaßbar, indem unterschiedlich eingefärbter Kunststoff verwendet wird.

Gemäß einer Weiterbildung der Erfindung sind die Lamellenstreifen parallelogrammförmig ausgebildet. Damit können die Stirnkanten der Lamellenstreifen eine den Schwenkweg derselben begrenzende Anschlagfunktion übernehmen. Dies gilt auch für eine weitere Ausgestaltung der Erfindung, gemäß der vorgesehen ist, daß sich in der Ruhelage der Lamellenstreifen deren Längskanten und in der völlig ausgeschwenkten Gebrauchslage nach einem Schwenkweg von etwa 120 ° der Lamellenstreifen deren Stirnkanten parallel zu den Profilleisten erstrecken.

Gemäß einer besonders vorteilhaften Weiterbildung der Erfindung, nimmt die Dicke der Lamellenstreifen von der Längsmitte zu den Längskanten hin ab. Die Dicke der Lamellenstreifen kann dabei in der Längsmitte durchlaufend etwa zwei mm und an den Längsrändern etwa ein mm betragen. Diese Maßnahme dient der Platz-, Gewichts- und Materialeinsparung und begünstigt insbesondere auch das leichtgängige Übereinandergleiten der Lamellenstreifen. Letzteres kann noch dadurch optimiert werden, daß die freien Endbereiche der Lamellenstreifen auf den den Lagerzapfen jeweils abgewandten Breitseiten jeweils eine Abflachung aufweisen.

Nach einer Weiterbildung der Erfindung, können aus Stabilitätsgründen, insbesondere auch im Hinblick auf den thermischen Längenausdehnungskoeffizienten, den es zu verringern gilt, die Lamellenstreifen durch eingelagerte Füllstoffe, insbesondere Glasfasern stabilisiert sein.

Die Distanzelemente weisen vorteilhafterweise eine rechteckige Grundform und an den Enden in Anpassung an den Radius der Lagerzapfenkopfstücke kreissegmentförmige Aussparungen auf und die Distanzelemente sind über zumindest einen Teilbereich ihrer Länge mit einem dem Öffnungsquerschnitt der in den Profilleisten vorgesehenen Nuten angepaßten Querschnittsprofil ausgebildet und sie sind bevorzugt als Kunststoffspritzlinge ausgeführt. Die Distanzelemente können somit leicht und einfach in die Nuten eingeschoben werden und definieren sodann den gewollten Abstand der Lagerzapfen der Lamellenstreifen voneinander in unbedingt zuverlässiger Weise.

Eine Weiterbildung der Erfindung ist dadurch gekennzeichnet, daß zwischen einem oder mehreren der Lagerzapfen und einem oder mehreren der Distanzelemente Rastmittel vorgesehen sind, um die Lamellenstreifen zumindest in der Nichtgebrauchslage ggf. aber auch in unterschiedlichen Gebrauchslagen gegen ungewollte Schwenkbewegungen zu sichern. Dabei können die Rastmittel jeweils aus zumindest einer Einkerbung

2

am Umfang des Kopfstücks eines Lagerzapfens und eines darin einrastbaren Vorsprungs in der kreissegmentförmigen Aussparung eines Distanzelements gebildet sein. Es empfiehlt sich, daß das Distanzelement dann einen dem Vorsprung benachbarten Durchbruch aufweist, der ein elastisches Zurückfedern des Vorsprungs ermöglicht.

Die Profilleisten können aus Strangpreßprofilabschnitten aus Metall, insbesondere Leichtmetall oder Kunststoff bestehen. In diesem Fall sind die Profilleistenenden, zumindest aber deren hinterschnittene Nuten durch Endkappen od. dgl. zu verschließen.

Die Profilleisten können bevorzugterweise aber auch als Kunststoffspritzgußteile ausgebildet sein, wodurch sich der Vorteil ergibt, daß die Endstücke einstückig angeformt werden können. Es ist dann lediglich noch erforderlich, die Nuten in den Profilleisten, die durch einen Schieber in der Spritzgußvorrichtung ausgeformt werden können, einendig durch einen Stopfen od. dgl. nach der Montage der Lamellenstreifen und Distanzstücke zu verschließen.

In Weiterbildung der Erfindung kann vorgesehen werden, daß an einer Profilleiste ein Haltegriff einstückig und materialeinheitlich angespritzt ist, wodurch sich eine besonders zweckmäßige Funktionserweiterung ergibt.

Die Blendschutzvorrichtung ist oberhalb einer Fahrzeugfensterscheibe, insbesondere Seitenscheibe an der Fahrzeugkarosserie befestigt. Gemäß einer Alternativlösung ist die erfindungsgemäße Blendschutzvorrichtung am Fensterrahmen einer Fahrzeugtür befestigt. Diese Lösung bietet den besonderen Vorteil, daß die Blendschutzvorrichtung in der Gebrauchslage verharren kann, wenn die Fahrzeugtür geöffnet wird.

Ein Ausführungsbeispiel der Erfindung wird nachfolgend anhand der Zeichnung näher erläutert. Es zeigen
Fig. 1 den vorderen rechten Innenraumbereich eines Fahrzeugs mit einer oberhalb der vorderen Seitenscheibe an der Fahrzeugkarosserie angeordneten Blendschutzvorrichtung in der Nichtgebrauchslage,
Fig. 2 eine Ansicht ähnlich der nach Fig. 1 mit in der Gebrauchslage dargestellter Blendschutzvorrichtung,
Fig. 3 eine Ansicht ähnlich der nach Fig. 1 mit einer am Türrahmen befestigten Blendschutzvorrichtung in der Nichtgebrauchslage,
Fig. 4 die Ansicht nach Fig. 3 mit in der Gebrauchslage dargestellter Blendschutzvorrichtung,
Fig. 5 eine Teilansicht der Blendschutzvorrichtung, teilweise im Schnitt,
Fig. 6 einen einzelnen Lamellenstreifen in Draufsicht,
Fig. 7 eine Seitenansicht nach Fig. 6,
Fig. 8 ein Distanzelement der Blendschutzvorrichtung in Draufsicht,
Fig. 9 ein gegenüber Fig. 8 abgewandeltes Distanzelement mit einem linksseitig davon dargestellten Lagerzapfen eines Lamellenstreifens und
Fig. 10 einen senkrechten Schnitt durch die Blendschutzvorrichtung in der Nichtgebrauchslage.

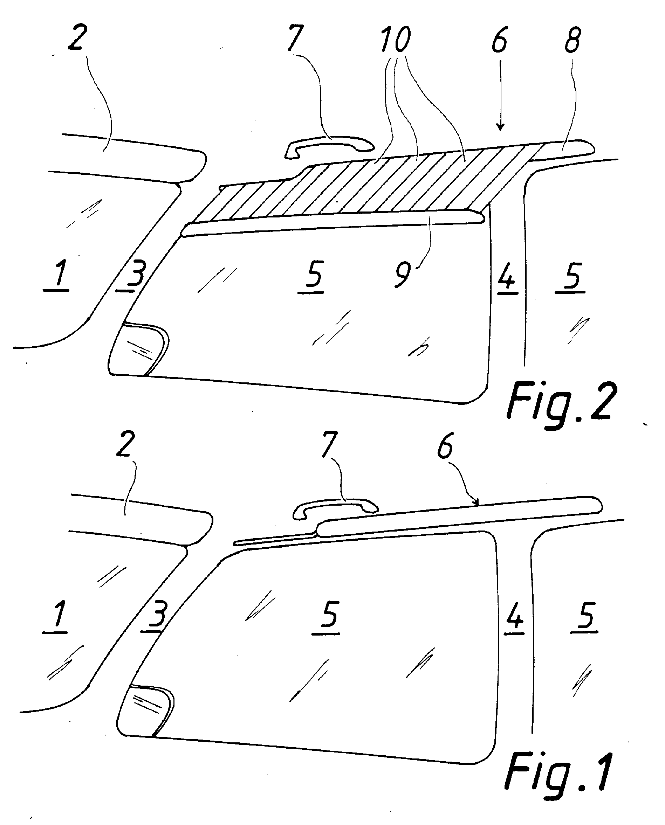

Fig. 1 zeigt den vorderen rechten Innenraumbereich eines Fahrzeuges und läßt die Windschutzscheibe 1 mit einer oberhalb derselben an der Karosserie angeordneten Sonnenblende 2, die A-Säule 3, die B-Säule 4, die Seitenscheiben 5, die neue Blendschutzvorrichtung 6 sowie einen Haltegriff 7 erkennen. Die Blendschutzvorrichtung 6, die oberhalb des vorderen Seitenfensters an der Fahrzeugkarosserie befestigt ist, nimmt in Fig. 1 die Nichtgebrauchslage ein, aus der sie im Bedarfsfalle in die in Fig. 2 gezeigte Gebrauchsstellung verschwenkbar ist. Fig. 2 läßt erkennen, daß die Blendschutzvorrichtung im wesentlichen aus einen oberen Profilleiste 8, die auch als Befestigungsschiene dient, einer unteren Profilleiste 9, die auch als Betätigungshandhabe dient, und aus zwischen den Profilschienen 8, 9 schwenkbeweglich gelagerten Lamellenstreifen 10 besteht. Die Anordnung nach Fig. 1 und 2 ist so getroffen, daß die vordere Seitenscheibe 5 im Bereich ihres oberen Randes gänzlich, d. h. von der A- bis zur B-Säule hin abdeckbar ist.

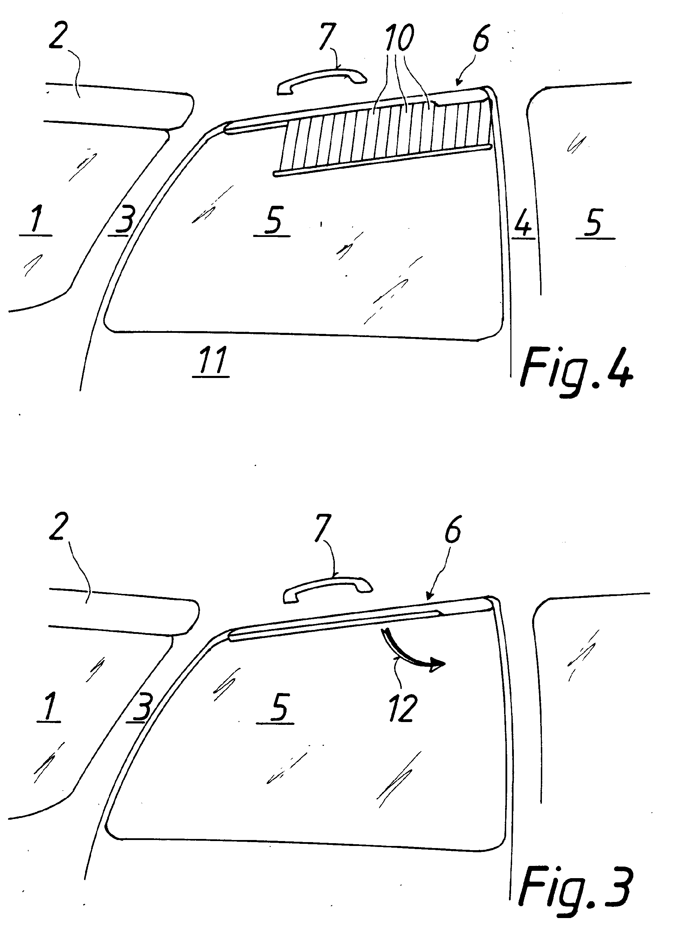

Bei dem in den Fig. 3 und 4 dargestellten Ausführungsbeispiel ist die Blendschutzvorrichtung 6 nicht an der Fahrzeugkarosserie sondern am oberen horizontal verlaufenden Schenkel der vorderen, ggf. auch hinteren Fahrzeugtüren 11 befestigt. Entgegen dem Ausführungsbeispiel nach Fig. 1 und 2 erfolgt hier die Überführung der Blendschutzvorrichtung aus der Nichtgebrauchslage in die Gebrauchslage von vorne nach hinten, also in Pfeilrichtung 12. Auch ist hier, anders als bei Fig. 1 und 2 gezeigt, nicht die gesamte Fensterbreite abgedeckt.

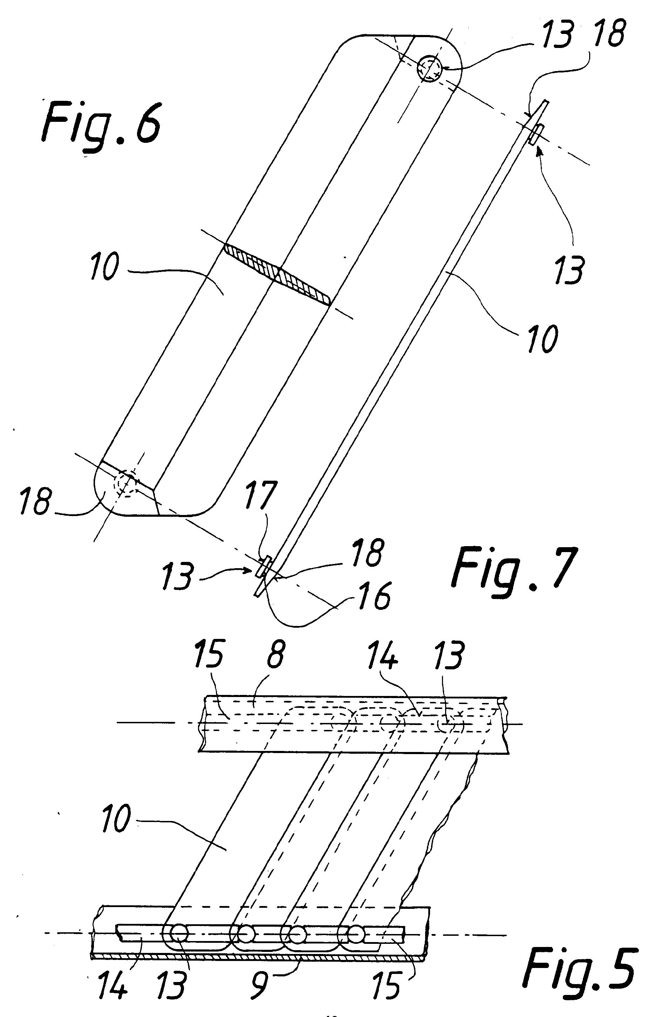

Fig. 5 zeigt eine Teilansicht der Blendschutzvorrichtung 6, wobei man die obere Profilleiste 8, die untere Profilleiste 9, eine Anzahl von Lamellenstreifen 10 mit Lagerzapfen 13 und die Lagerzapfen 13 der Lamellenstreifen 10 auf Abstand haltende Distanzelemente 14 erkennen kann. Jede Profilleiste 8 und 9 besitzt eine durchlaufende, hinterschnittene, z. B. schwalbenschwanzförmig ausgebildete Nut 15, welche zur Aufnahme der Lagerzapfen 13 und der Distanzelemente vorgesehen ist.

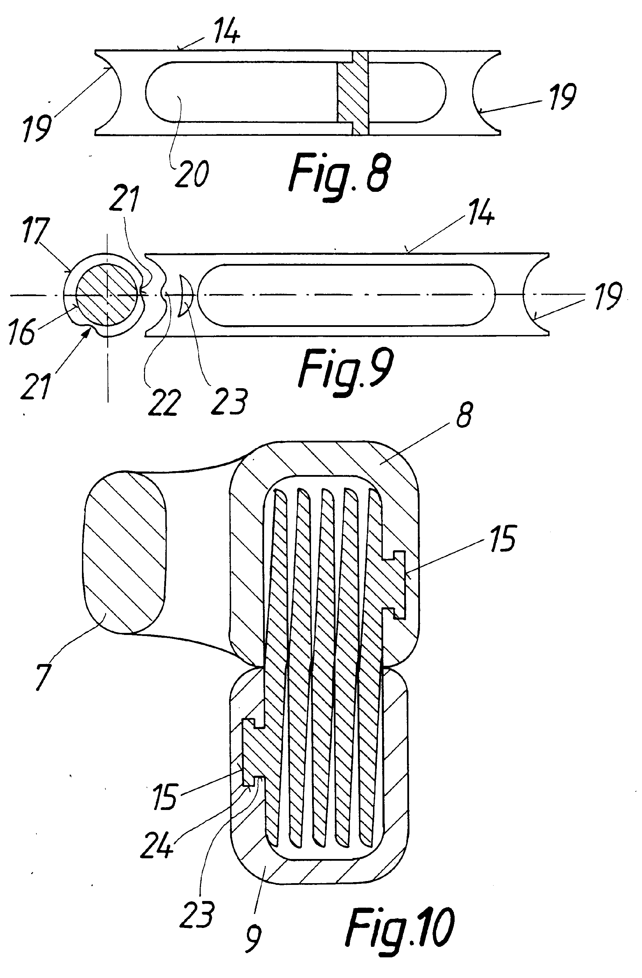

In den Fig. 6 und 7 ist ein Lamellenstreifen 10 in zwei Ansichten dargestellt. Der Lamellenstreifen 10 ist parallelogrammförmig gestaltet und seine Längskanten verlaufen in der Nichtgebrauchslage der Blendschutzvorrichtung 6 parallel zu den Profilschienen 8 und 9 (vgl. auch Fig. 10), während die Stirnkanten parallel zur Längsachse der Profilleisten 8, 9 verlaufen, wenn die Blendschutzvorrichtung ihre Gebrauchslage einnimmt. Der Lamellenstreifen 10 ist als Kunststoffspritzgußkörper ausgebildet und weist die Lagerzapfen 13 an den Längsenden einstückig angeformt auf. Dabei ist jeweils ein Lagerzapfen auf der Vorderseite und ein zweiter Lagerzapfen auf der Lamellenstreifen-Rückseite angeformt. Jeder Lagerzapfen 13 weist jeweils ein zylindrisches Halsstück 16 und ein zylindrisches Kopfstück 17 (Kragen) auf. Jeder Lagerzapfen 13 ist dem Öffnungsquerschnitt der Nuten 15 in den Profilleisten 8, 9 angepaßt.

Wie Fig. 6 und 7 weiterhin zeigen, nimmt die Dicke der Lamellenstreifen von deren Längsmitte zu den Längskanten (einmal nach links und einmal nach rechts) hin ab. Weiterhin ist zu sehen, daß die freien Endbereiche der Lamellenstreifen 10 auf den den Lagerzapfen 13 jeweils abgewandten Breitseiten jeweils eine Abflachung 18 aufweisen.

Fig. 8 zeigt ein Distanzelement 14, das eine rechteckige Grundform, konkav gestaltete Ausnehmungen 19 an den Stirnenden und bereichsweise - wie dargestellt - einen dem Öffnungsquerschnitt der Profilleistennuten 15 entsprechenden Querschnitt aufweist. Der Radius der Ausnehmungen 19 entspricht dem des Kopfstücks 17 der Lagerzapfen 13. Der flache Teil des Distanzelements 14 paßt also in die Erweiterung und der dicke Teil (Ansatz 20) in die Verengung jeder hinterschnittenen Nut 15. Die Länge der Distanzelemente 14 ist so bemessen, daß die einzelnen Lamellenstreifen 10 sich, wie in Fig. 5 gezeigt, in der Gebrauchslage noch randseitig überlappen.

Fig. 9 zeigt eine Rasteinrichtung, um die neue Blendschutzvorrichtung zumindest in ihrer Nichtgebrauchslage zu halten. Hierzu weist ein Kopfstück 17 eines Lagerzapfens 13 zumindest eine umfangsseitige Einkerbung 21 auf, in die ein Vorsprung 22, der den konkaven Verlauf der Ausnehmung 19 unterbricht, einzuschnäppern vermag. Eine Federelastizität wird durch eine dem Vorsprung 22 benachbarte Ausnehmung 23, die einen flachen Teil des Distanzelements 14 durchsetzt, bewirkt.

Fig. 10 zeigt einen vertikalen Schnitt durch die komplette Blendschutzvorrichtung 6, die hier in der Nichtgebrauchslage dargestellt ist. Dabei ist zunächst zu sehen, daß die Profilleisten 8, 9 jeweils als Schienen mit U-förmigem Querschnittsprofil ausgebildet sein können, wobei sich jeweils in einem Schenkel der Profilleisten (auf einander gegenüberliegenden Seiten) eine Nut 15 befindet. Jede Nut 15 weist einen engeren, der Profilöffnung zugewandten Nutteil 23 und einen sich daran anschließenden, erweiterten Nutteil 24 auf. Der Nutteil 23 entspricht in Höhe und Weite dem Halsstück 16 der Lagerzapfen 13 und dem Ansatz 20 der Distanzelemente 14, während der Nutteil 24 dem Kopfstück 17 und dem flacheren Querschnittsbereich der Distanzstücke 14 entspricht. Die Lagerzapfen 13 und die Distanzelemente 14 können somit in die Nuten 15 der Profilleisten 8, 9 eingeschoben werden. Bei der Montage erfolgt abwechselnd ein Einstecken eines Lagerzapfens 13 und eines Distanzelements 14, wobei jedes erste und letzte Montageteil in jeder Nute 15 gegen ein axiales Verschieben, z.B. durch einen Stopfen, eine Endkappe od. dgl. Mittel zu sichern ist.

Fig. 10 zeigt noch eine Weiterbildung, in der die Profilleiste 8, die ja auch als Befestigungsschiene dient, mit einem angeformten Haltegriff 7 ausgestattet ist.

Zweckmäßigerweise bestehen sämtliche Teile der neuen Blendschutzvorrichtung, ggf. mit Ausnahme der nicht gezeigten Befestigungselemente, aus Kunststoff, wobei die Herstellung bevorzugterweise im Spritzgußverfahren erfolgt.

## Patentansprüche

1. Blendschutzvorrichtung, insbesondere für Fahrzeuge, bestehend aus zwei parallel zueinander verlaufenden Profilleisten (8, 9) und aus einer Anzahl zwischen den Profilleisten (8, 9) angeordneten, einander überlappenden Lamellenstreifen (10), deren Längsenden jeweils mit einer der Profilleisten (8, 9) gelenkig verbunden sind und deren jeweilige Anlenkpunkte einander diagonal gegenüberliegen, dadurch gekennzeichnet, daß jede Profilleiste (8, 9) eine längsdurchlaufende, etwa schwalbenschwanzartig gestaltete Nut (15) aufweist, daß jeder Lamellenstreifen (10) an den Längsenden jeweils einen dem Öffnungsquerschnitt der Nuten (15) angepaßten Lagerzapfen (13) trägt, daß jeweils ein Lagerzapfen (13) auf der Vorderseite und jeweils ein Lagerzapfen (13) auf der Rückseite jedes Lamellenstreifens (10) angeordnet ist, daß zwischen den Lagerzapfen (13), einander benachbarter Lamellenstreifen (10) ein in der Nut (15) geführtes, sich an den Lagerzapfen (13) abstützendes Distanzelement (14) angeordnet ist und daß die Lagerzapfen (13) des ersten und letzten Lamellenstreifens (10) durch ein Sperrelement gegen axiales Verschieben gesichert sind.

2. Blendschutzvorrichtung nach Anspruch 1, dadurch gekennzeichnet, daß die Profilleisten (8, 9) als Schienen mit U-förmigem Querschnittsprofil ausgeführt sind, deren offenen Seiten einander gegenüberliegen.

3. Blendschutzvorrichtung nach Anspruch 2, dadurch gekennzeichnet, daß die Nuttiefe der Profilleisten (8, 9) gleich oder geringfügig größer ist als die halbe Breite der Lamellenstreifen (10).

4. Blendschutzvorrichtung nach mindestens einem der Ansprüche 1 bis 3, dadurch gekennzeichnet, daß die Lamellenstreifen (10) als Kunststoffspritzgußkörper mit einstückig daran angeformten Lagerzapfen (13), die jeweils ein zylindrisches Halsstück (16) und ein zylindrisches Kopfstück (17) aufweisen, ausgeführt sind.

EP 0 383 181 B1

5. Blendschutzvorrichtung nach zumindest einem der Ansprüche 1 bis 4, dadurch gekennzeichnet, daß die Lamellenstreifen (10) parallelogrammförmig ausgebildet sind.

6. Blendschutzvorrichtung nach zumindest einem der Ansprüche 1 bis 5, dadurch gekennzeichnet, daß sich in der Ruhelage der Lamellenstreifen (10) deren Längskanten und in der völlig ausgeschwenkten Gebrauchslage nach einem Schwenkweg von etwa 120 ° der Lamellenstreifen (10) deren Stirnkanten parallel zu den Profilleisten (8, 9) erstrecken.

7. Blendschutzvorrichtung nach zumindest einem der Ansprüche 1 bis 6, dadurch gekennzeichnet, daß die Dicke der Lamellenstreifen (10) von der Längsmitte zu den Längskanten hin abnimmt.

8. Blendschutzvorrichtung nach Anspruch 7, dadurch gekennzeichnet, daß die Dicke der Lamellenstreifen (10) in der Längsmitte durchlaufend etwa zwei mm und an den Längsrändern etwa ein mm beträgt.

9. Blendschutzvorrichtung nach zumindest einem der Ansprüche 1 bis 8, dadurch gekennzeichnet, daß die freien Endbereiche der Lamellenstreifen (10) auf den den Lagerzapfen (13) jeweils abgewandten Breitseiten jeweils eine Abflachung (18) aufweisen.

10. Blendschutzvorrichtung nach zumindest einem der Ansprüche 1 bis 9, dadurch gekennzeichnet, daß die Lamellenstreifen (10) durch eingelagerte Füllstoffe, insbesonder Glasfasern stabilisiert sind.

11. Blendschutzvorrichtung nach zumindest einem der Ansprüche 1 bis 10, dadurch gekennzeichnet, daß die Distanzelemente (14) eine rechteckige Grundform und an den Enden in Anpassung an die Kopfstücke (17) der Lagerzapfen (13) kreissegmentförmige Aussparungen (19) aufweisen und daß die Distanzelemente (14) über zumindest einen Teilbereich ihrer Länge mit einem dem Öffnungsquerschnitt der in den Profilleisten (8, 9) vorgesehenen Nuten (15) angepaßten Querschnittsprofil ausgebildet sind.

12. Blendschutzvorrichtung nach zumindest einem der Ansprüche 1 bis 11, dadurch gekennzeichnet, daß die Distanzelemente (14) als Kunststoffspritzlinge ausgebildet sind.

13. Blendschutzvorrichtung nach zumindest einem der Ansprüche 1 bis 12, dadurch gekennzeichnet, daß zwischen einem oder mehreren der Lagerzapfen (13) und einem oder mehreren der Distanzelemente (14) Rastmittel vorgesehen sind, um die Lamellenstreifen (10) zumindest in der Nichtgebrauchslage ggf. aber auch in unterschiedlichen Gebrauchslagen gegen ungewollte Schwenkbewegungen zu sichern.

14. Blendschutzvorrichtung nach Anspruch 13, dadurch gekennzeichnet, daß die Rastmittel jeweils aus zumindest einer Einkerbung (21) am Umfang des Kopfstücks (17) eines Lagerzapfens (13) und eines darin einrastbaren Vorsprungs (22) in der kreissegmentförmigen Aussparung (19) eines Distanzelements (14) gebildet sind.

15. Blendschutzvorrichtung nach Anspruch 14, dadurch gekennzeichnet, daß das Distanzelement (14) einen dem Vorsprung (22) benachbarten Durchbruch (23) aufweist, der ein elastisches Zurückfedern des Vorsprungs (22) ermöglicht.

16. Blendschutzvorrichtung nach zumindest einem der Ansprüche 1 bis 15, dadurch gekennzeichnet, daß die Profilleisten (8, 9) aus Strangpreßprofilabschnitten aus Metall, insbesondere Leichtmetall oder Kunststoff bestehen.

17. Blendschutzvorrichtung nach zumindest einem der Ansprüche 1 bis 15, dadurch gekennzeichnet, daß die Profilleisten (8, 9) als Kunststoffspritzgußteile ausgebildet sind.

18. Blendschutzvorrichtung, insbesondere nach Anspruch 17, dadurch gekennzeichnet, daß an einer der Profilleisten (8) ein Haltegriff (7) einstückig und materialeinheitlich angespritzt ist.

19. Blendschutzvorrichtung nach zumindest einem der Ansprüche 1 bis 18, dadurch gekennzeichnet, daß dieselbe oberhalb einer Fahrzeugfensterscheibe, insbesondere Seitenscheibe (5), an der Fahrzeugkarosserie befestigt ist.

20. Blendschutzvorrichtung nach zumindest einem der Ansprüche 1 bis 17, dadurch gekennzeichnet, daß dieselbe am Fensterrahmen einer Fahrzeugtür (11) befestigt ist.


## Claims

1. An anti-glare device, especially for vehicles, comprising two parallel sectional bars (8, 9) and a number of overlapping segment strips (10) disposed between the sectional bars (8, 9), the longitudinal ends of each strip being pivotably connected to one of the bars (8, 9) and the respective pivot points being diagonally opposite one another, characterised in that, each sectional bar (8, 9) has a longitudinal, approximately dovetail, slot (15), each segment strip (10) at each longitudinal end has a pivot pin (13) matching the opening cross-section of the slots (15), that a pivot pin (13) is disposed on the front and a pivot pin (13) on the back of each segment strip (10), that a spacer member (14) guided in the slot (15) and bearing on the pivot pins (13) is disposed between the pivot pins (13) of adjacent segment strips (10), and the pivot pins (13) of the first and last segment strip (10) are secured by a locking member against axial displacement.

2. An anti-glare device according to claim 1, characterised in that, the sectional bars (8, 9) are rails having a U-shaped cross-section and open sides which face one another.

3. An anti-glare device according to claim 2, characterised in that, the depth of the slots in the sectional bars (8, 9) is the same as or slightly greater than half the width of the segment strips (10).

4. An anti-glare device according to at least one of claims 1 to 3, characterised in that, the segment strips (10) are injection-moulded plastics members with integrally formed pivot pins (13) each comprising a cylindrical neck piece (16) and a cylindrical head piece (17).

5. An anti-glare device according to at least one of claims 1 to 4, characterised in that the segment strips (10) have the shape of parallelograms.

6. An anti-glare device according to at least one of claims 1 to 5, characterised in that, when the segment strips (10) are in the inoperative position, their longitudinal edges extend parallel to the sectional bars (8, 9), whereas when the segment strips (10) are in the fully pivoted-out operative position, after pivoting through about 120°, their end edges are parallel to the sectional bars (8, 9).

7. An anti-glare device according to at least one of claims 1 to 6, characterised in that, the thickness of the segment strips (10) decreases from the longitudinal centre to the longitudinal edges.

8. An anti-glare device according to claim 7, characterised in that, the thickness of the segment strips (10) is about 2 mm all alongthe longitudinal centre and about 1 mm at the longitudinal edges.

9. An anti-glare device according to at least one of claims 1 to 8, characterised in that, the projecting end regions of the segment strips (10) are each flattened (18) on the wide sides remote from the pivot pins (13).

10. An anti-glare device according to at least one of claims 1 to 9, characterised in that, the segment strips (10) are stabilised by incorporated fillers, more particularly glass fibres.

11. An anti-glare device according to at least one of claims 1 to 10, characterised in that, the spacer members (14) have a basic rectangular shape and, at their ends, have circular segmental recesses (19) matching the head pieces (17) of the pivot pins (13), and the spacer members (14), over at least part of their length, are given a cross-section matching the opening cross-section of the slots (15) formed in the sectional bars (8, 9).

12. An anti-glare device according to at least one of claims 1 to 11, characterised in that, the spacer members (14) are of injected-moulded plastics.

13. An anti-glare device according to at least one of claims 1 to 12, characterised in that, catch means are provided between one or more of the pivot pins (13) and one or more of the spacer members (14), in order to protect the segment strips (10) from accidental pivoting, at least in the inoperative position and, if required, also in various operative positions.

14. An anti-glare device according to claim 13, characterised in that, the catch means each comprise at least one notch (21) at the periphery of the head piece (17) of a pivot pin (13) and one projection (22) for engaging the notch, the projection being in the circular segmental recess (19) in a spacer member (14).

15. An anti-glare device according to claim 14, characterised in that, the spacer member (14) has an aperture (23) adjacent the projection (22), so that the projection (22) can resiliently spring back.

16. An anti-glare device according to at least one of claims 1 to 15, characterised in that, the sectional bars (8, 9) are extruded section members made of metal, especially light metal or plastics.

17. An anti-glare device according to at least one of claims 1 to 15, characterised in that, the sectional bars (8, 9) are injection-moulded plastics parts.

18. An anti-glare device, especially according to claim 17, characterised in that, a handle (7) made of the same material is integrally formed on one of the sectional bars (8).

19. An anti-glare device according to at least one of claims 1 to 18, characterised in that, it is secured to the vehicle body above a window, especially a side window (5).

20. An anti-glare device according to at least one of claims 1 to 17, characterised in that, it is secured to the window-frame of a vehicle door (11).


**Revendications**

1. Dispositif antiéblouissement, en particulier pour véhicules, comprenant deux bordures profilées (8,9) dirigées parallèlement l'une à l'autre et une pluralité de lamelles (10) chevauchantes disposées entre les bordures profilées (8,9) dont les extrémités longitudinales sont articulées chacune à l'une des bordures profilées (8,9) et dont les points d'articulation respectifs sont diagonalement opposés, caractérisé en ce que chaque bordure profilée (8,9) comporte une rainure (15) sensiblement en queue d'aronde longitudinalement continue, en ce que chaque lamelle (10) comporte à chacune de ses extrémités longitudinales un tourillon (13) adapté à la section droite d'ouverture des rainures (15), en ce qu'un tourillon (13) est placé à l'avant et un tourillon (13) à l'arrière de chaque lamelle (10), en ce qu'un élément séparateur (14) s'appuyant sur les tourillons (13) guidé dans la rainure (15), est placé chaque fois entre les tourillons (13) de lamelles (10) voisines, et en ce que les tourillons (13) de la première lamelle (10) et de la dernière sont immobilisés en translation axiale par un élément d'arrêt.

2. Dispositif antiéblouissement selon la revendication 1, caractérisé en ce que les bordures profilées (8,9) se présentent sous la forme de rails de profil de section droite en U dont les côtés ouverts sont en regard.

3. Dispositif antiéblouissement selon la revendication 2, caractérisé en ce que la profondeur de rainure des bordures profilées (8,9) est égale ou légèrement supérieure à la moitié de la largeur des lamelles (10).

4. Dispositif antiéblouissement selon l'une au moins des revendications 1 à 3, caractérisé en ce que les lamelles (10) se présentent sous la forme de corps de matière plastique moulés par injection avec des tourillons (13) qui y sont formés d'un seul tenant, qui comportent chacun un col (16) et une tête cylindriques (17).

5. Dispositif antiéblouissement selon l'une au moins des revendications 1 à 4, caractérisé en ce que les lamelles (10) ont la forme d'un parallélogramme.

6. Dispositif antiéblouissement selon l'une au moins des revendications 1 à 5, caractérisé en ce que, dans la position de repos des lamelles (10), leurs côtés longitudinaux et, dans leur position d'utilisation entièrement pivotée après un pivotement d'environ 120° des lamelles (10), leurs côtés frontaux s'étendent parallèlement aux bordures profilées (8,9).

7. Dispositif antiéblouissement selon l'une au moins des revendications 1 à 6, caractérisé en ce que l'épaisseur des lamelles (10) diminue du milieu de la longueur vers les côtés longitudinaux.

8. Dispositif antiéblouissement selon la revendication 7, caractérisé en ce que l'épaisseur des lamelles (10) est, au milieu de la longueur, toujours d'environ 2 mm et aux bords longitudinaux d'environ 1 mm.

9. Dispositif antiéblouissement selon l'une au moins des revendications 1 à 8, caractérisé en ce que les zones terminales libres des lamelles (10) comportent chaque fois un aplatissement respectif (18) sur les côtés de la largeur opposés chaque fois au tourillon (13).

10. Dispositif antiéblouissement selon l'une au moins des revendications 1 à 9, caractérisé en ce que les lamelles (10) sont stabilisées par des matières de charge incorporées, en particulier des fibres de verre.

11. Dispositif antiéblouissement selon l'une au moins des revendications 1 à 10, caractérisé en ce que les éléments séparateurs (14) ont une forme à base rectangulaire et comportent aux extrémités des évidements en forme de segment de cercle (19) en adaptation aux sections de tête (17) des tourillons (13), et en ce que les éléments séparateurs (14) comportent au moins sur une partie de leur longueur un profil de section droite adapté à la section droite d'ouverture des rainures (15) prévues dans les bordures profilées (8,9).

12. Dispositif antiéblouissement selon l'une au moins des revendications 1 à 11, caractérisé en ce que les éléments séparateurs (14) se présentent sous la forme de pièces de matière plastique moulées par injection.

13. Dispositif antiéblouissement selon l'une au moins des revendications 1 à 12, caractérisé en ce qu'il est prévu entre un ou plusieurs des tourillons (13) et un ou plusieurs des éléments séparateurs (14) des moyens d'encliquetage pour empêcher les lamelles (10) d'effectuer des mouvements de pivotement intempestifs au moins dans la position de non utilisation, mais aussi éventuellement dans différentes positions d'utilisation.

14. Dispositif antiéblouissement selon la revendication 13, caractérisé en ce que les moyens d'encliquetage sont formés dans chaque cas par au moins une encoche (21) à la périphérie de la tête (17) d'un tourillon (13) et d'une saillie (22) qui peut s'y encliqueter dans l'évidement en forme de segment de cercle (19) d'un élément séparateur (14).

15. Dispositif antiéblouissement selon la revendication 14, caractérisé en ce que l'élément séparateur (14) comporte un dégagement (23) voisin de la saillie (22) qui permet un rappel élastique de la saillie (22).

16. Dispositif antiéblouissement selon l'une au moins des revendications 1 à 15, caractérisé en ce que les bordures profilées (8,9) sont constituées par des sections profilées extrudées en métal, en particulier en métal léger ou en matière plastique.

17. Dispositif antiéblouissement selon l'une au moins des revendications 1 à 15, caractérisé en ce que les bordures profilées (8,9) se présentent sous la forme de pièces de matière plastique moulées par injection.

18. Dispositif antiéblouissement, en particulier selon la revendication 17, caractérisé en ce qu'une poignée (7) est moulée par injection sur l'un des rebords profilés (8) d'un seul tenant et avec homogénéité des matières.

19. Dispositif antiéblouissement selon l'une au moins des revendications 1 à 18, caractérisé en ce qu'il est fixé au-dessus d'une glace du véhicule, en particulier une glace latérale (5), sur la carrosserie du véhicule.

20. Dispositif antiéblouissement selon l'une au moins des revendications 1 à 17, caractérisé en ce qu'il est fixé au cadre de vitre d'une portière (11) du véhicule.

*Fig.2*

*Fig.1*

Fig.4

Fig.3

Fig.6

Fig.7

Fig.5

14

19

19

20

*Fig.8*

21

17

16

21

22  23

14

19

*Fig.9*

8

15

7

15

24

23

9

*Fig.10*